# EUROPEAN PATENT APPLICATION

(11) **EP 4 446 954 A1**
(43) Date of publication of application: **16.10.2024**
(21) Application number: 23020180.8
(22) Date of filing: 12.04.2023
(51) Int. Cl.: G06Q 10/06, G06Q 10/10, G06Q 30/02, G06Q 50/00

(54) **METHOD TO ENABLE BUSINESS ENTITIES TO BE PRO-ACTIVELY CONNECTED WITH OTHER BUSINESS ENTITIES**

(71) Applicant: Reidy, Rommel Neil, Castlebridge, Co. Wexford (IE)
(72) Inventor: Reidy, Rommel Neil, Castlebridge, Co. Wexford (IE)

(57) **Abstract**

Conciliantis is a process for searching, and introducing businesses entities / commercial enterprises where common interests, or synergies have been determined. This helps businesses entities / commercial enterprises sell more and buy better. It also enables and facilitates networking and expansion into new markets and or areas of interest.

The Conciliantis Process Engine (CPE) implements the functionality of the Conciliantis process model.

The Conciliatis Process consists of the following discrete steps.

**Search**

This process step consists of two discrete components.
• SRS Search Registered Subscribers. Involves searching the business entities / commercial enterprises registered in Conciliantes.
• STI Search Trawl Internet. Involves searching the internet for business entities / commercial enterprises which are not registered in Conciliantis.

**Select**

Select most appropriate business entities / commercial enterprises returned by the search operations which are likely to be of interest to a particular subscriber.

SRS operations search the the business entities / commercial enterprises which are registered in Conciliantes

STI operations search & trawl the internet for business entities / commercial enterprises to discover the possibility of new opportunities for subscribers which are registered in Conciliantis.

For STI operations the following steps will also be performed
• De-duplicate
• Harmonize
• Enrich

**Profile**

Applying subscriber particular weighting and profiling criteria to evaluate the results

**Filter**

Apply subscriber particular filtering criteria to prepare a sub-set of the results

**Match**

Apply subscriber particular matching criteria to meet the subscriber requirements.

**Introduce**

Initiate an electronic data transfer to the subscriber(s) computer(s) to transfer appropriate details of the business entities / commercial enterprises which will meet the individual subscriber requirements / selection criteria.

## Description

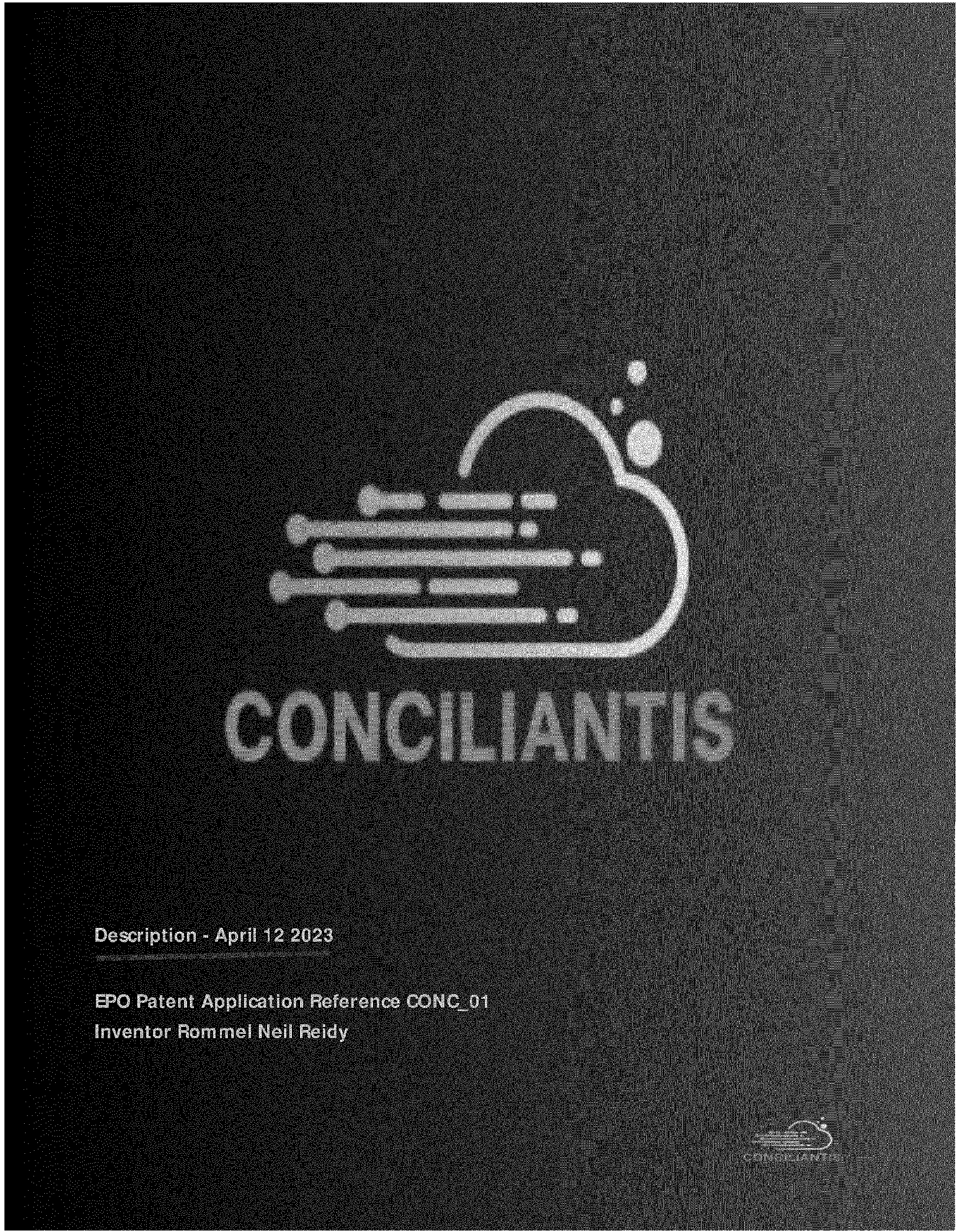

### Table of Contents

| | |
|---|---|
| **What is Conciliantis?** | **3** |
| **Businesses supported by Conciliantis** | **4** |
| **How does Conciliantis work?** | **5** |
| **Why Conciliantis?** | **6** |

### What is Conciliantis?

Conciliantis is an internet based electronic computer process for searching, selecting, matching, profiling and introducing businesses entities / commercial enterprises to each other and helps facilitate more selling and better buying.

Conciliantis offers a highly customizable process to enable business entities / commercial enterprises to be connected with other business entities / commercial enterprises to achieve accelerated and streamlined growth by having access to market places which match their requirements and expectations.

Implementing the Conciliantis process will help make a business entity / commercial enterprise more efficient and more successful. It will pro-actively bring businesses entities / commercial enterprises together and hence open new possibilities for doing more and better business regardless of the geographical location or line of business.

Due to its unique process architecture, Conciliantis will work with all types and all lines of businesses. It is not restricted to any particular business model, mode of business or geographical location.

It will benefit any business entity / commercial enterprise regardless of the type of business or line of business, for example, those involved in the provision of healthcare services as well as those involved in manufacturing, retail, wholesale, medical products, sales & marketing, etc.

### Businesses supported by Conciliantis.

Conciliantis makes use of artificial intelligence and conventional computer programming to support the Conciliantis process model. It will determine synergies between business entities / commercial enterprises and establish whether areas of mutual interest exist.

Some examples of supported business entities / commercial enterprises include:
- Healthcare (Hospitals, Clinics)
- Manufacturing (Automotive, Machinery, etc.)
- Logistics
- Warehousing
- Retail
- Wholesale
- Pharmaceutical products
- Food and Beverage
- Utilities (Gas, Electricity, Water)
- Agriculture
- Fisheries and wildlife
- Forestry
- Hospitality sector (Hotels, Catering, Tourism)

### How does Conciliantis work?

Conciliantis is a subscription based service. Business entities and commercial enterprises will need to register with Conciliantis to obtain the benefits of being introduced to other business entities and commercial enterprises for the purposes of cultivating new sales/purchasing opportunities and being exposed to new markets.

The Conciliantis process will pro-actively search, trawl, de-duplicate, harmonize, enrich, profile, match and introduce business entities and commercial enterprises to each other.

It will pro-actively trawl the internet for new business entities / commercial enterprises and communicate their details to interested subscribers.

Conciliantis makes use of artificial intelligence along with conventional computer programming to execute the Conciliantis Process which will pro-actively search, trawl, profile, match and introduce business entities and commercial enterprises to each other.

It will make use of cloud based and on-premise computing resources to support the Conciliantis process. Conciliantis will send regular reminders to subscribers to ensure that the details provided are accurate and up to date.

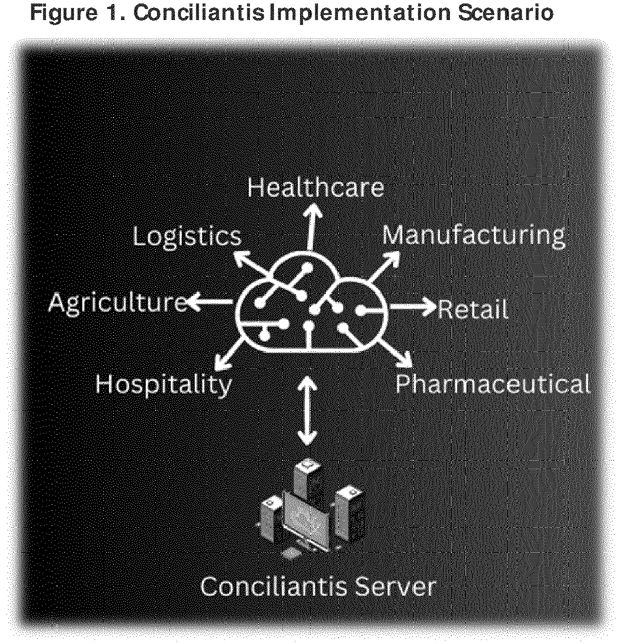

### Conciliantis Process Engine

The Conciliantis process is implemented through the Conciliatis Process Engine.

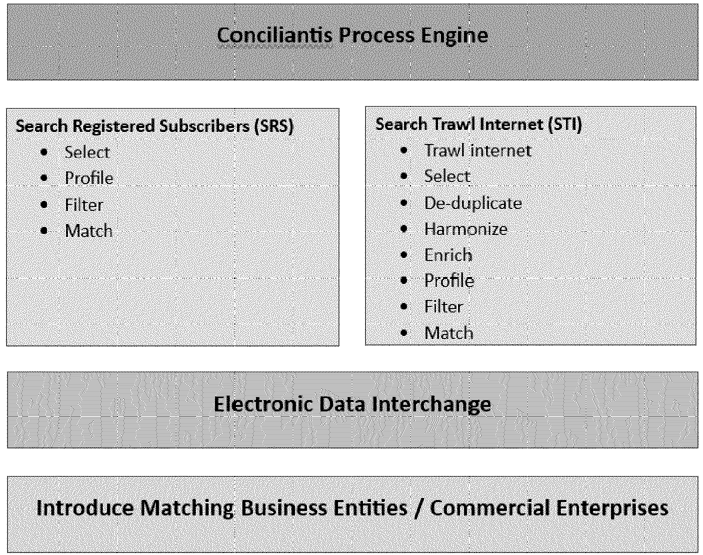

### Why Conciliantis?

In depth research has been undertaken to ascertain the uniqueness of Conciliantis.

There is currently no comparable process on the market.

A number of processes are available which cater for a particular business entity / commercial enterprise to allow its customers & suppliers to register on its own local network but this is not the same as Conciliantis as it involves a known business entity / commercial enterprise reaching out to its known customers & suppliers to enable easier processing of payments, invoices, goods receipt, returns, taxes, etc.

Such processes & systems do not provide the means to expand into new markets.

## Claims

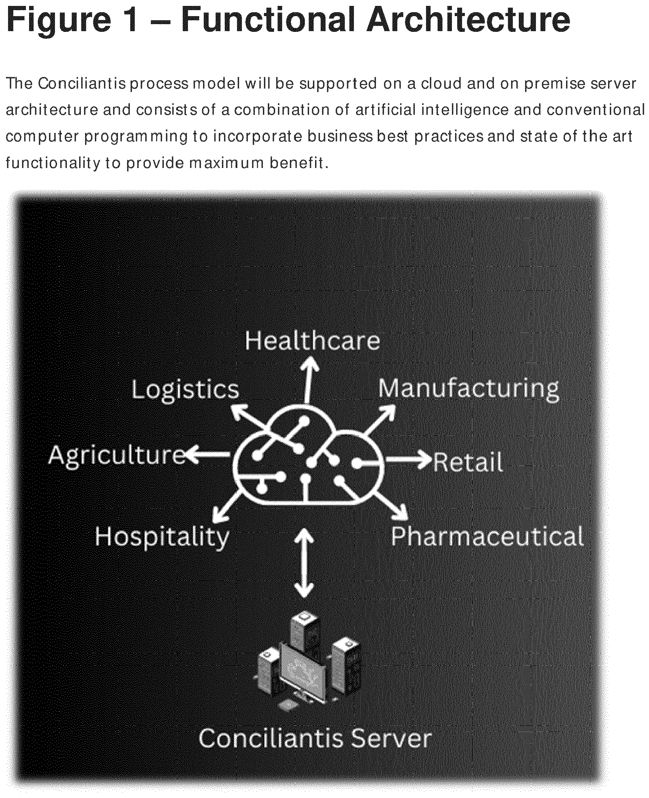

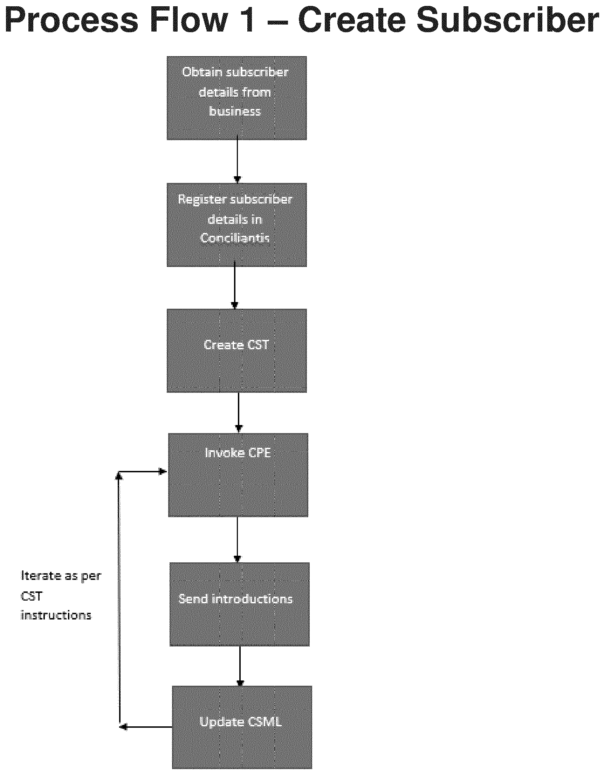

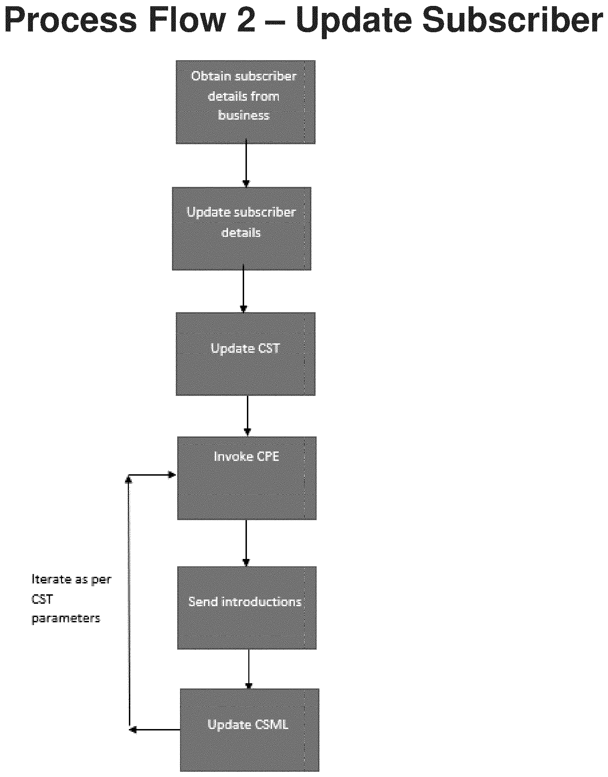

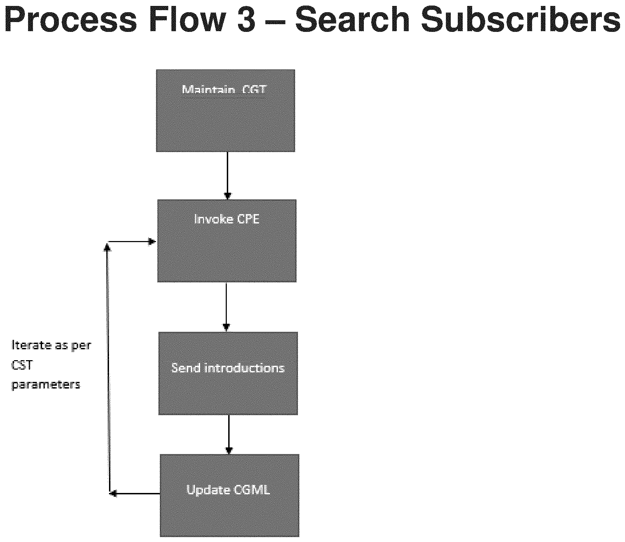

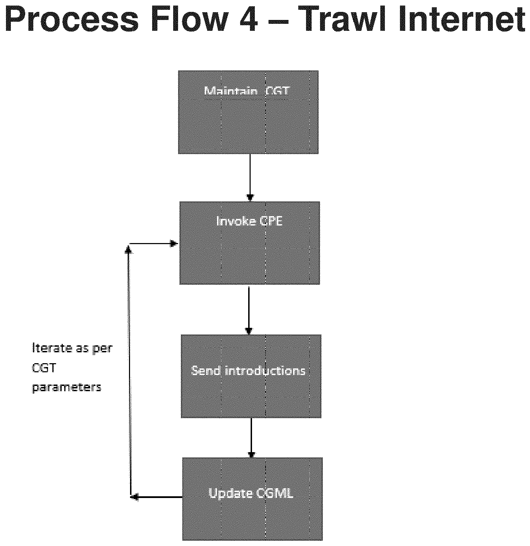

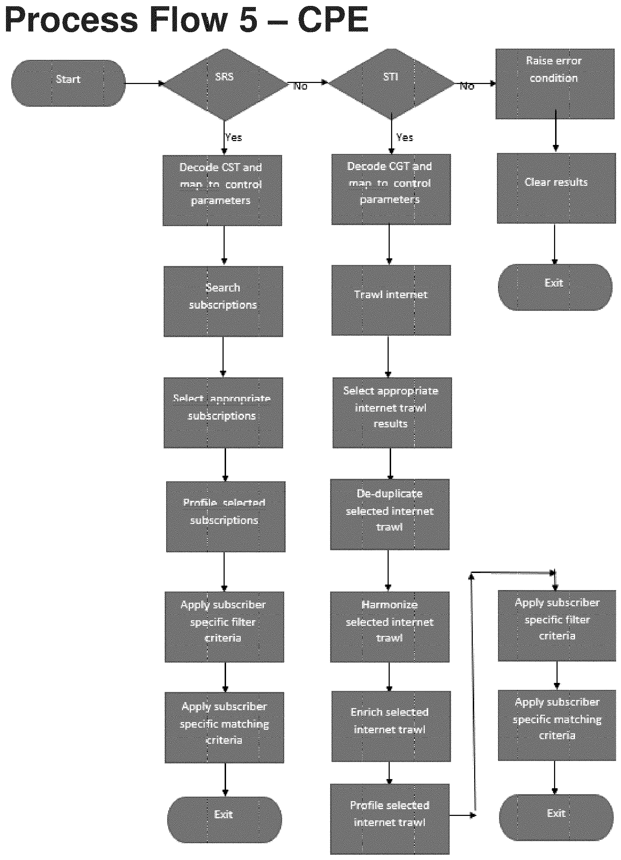

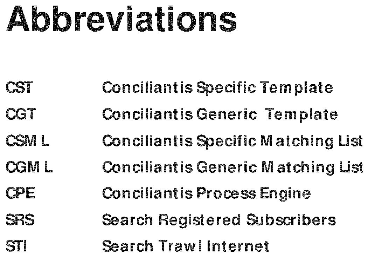

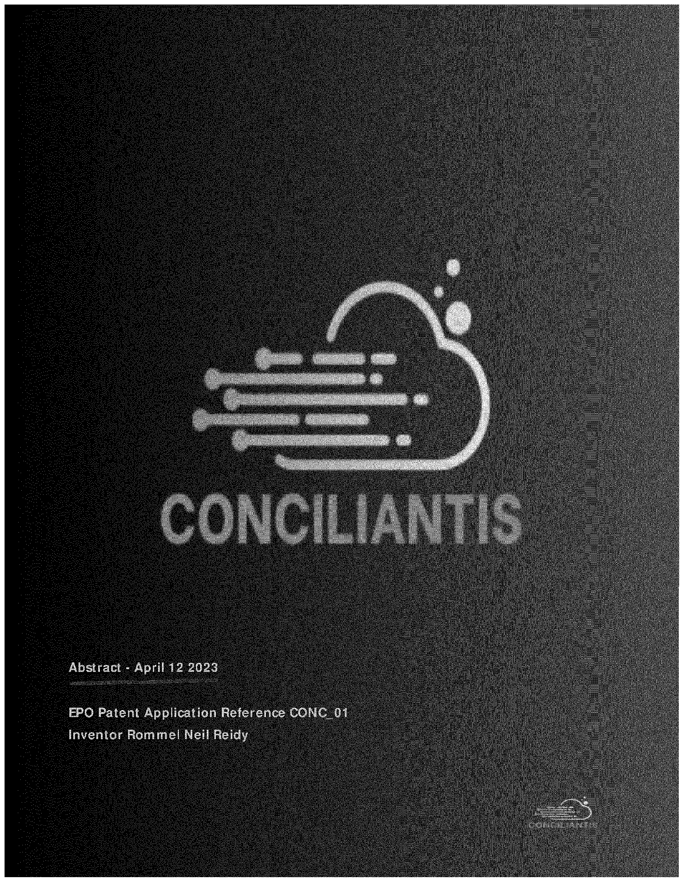

1. A methodology (Figure 2) consisting of a set of processes to enable business entities / commercial enterprises to be pro-actively connected with other business entities / commercial enterprises regardless of their physical location (Figure 1) comprising:
1.1 A process comprising functionality to perform the following operations:
1.1.1 Register new business entities / commercial enterprises and allow for business entities / commercial enterprises to record preferences for introduction to other business entities / commercial enterprises (Figure 3).
1.1.2 Maintain details of business entities / commercial enterprises and allow for business entities / commercial enterprises to change preferences for introduction to other business entities / commercial enterprises (Figure 4).
1.1.3 For each registered subscriber, search the registered business entities / commercial enterprises and apply the selection parameters particular to each business entity / commercial enterprise (Figure 61) AND 1.1.4 Trawl the internet and apply the selection parameters particular to each business entity / commercial enterprise (Figure 6.2).
1.1.5 Cleanse the results and apply filter and match parameters particular to each subscriber and send the results by electronic data transfer to the subscribers (Figure 6.3).
1.1.6 Allow subscribers to review the results (Figure 7).
The methodology and processing involves some existing methods and processes as well as some new ones which I have invented and this combination of current and new is unique and provides functionality which is currently not available.
A suitably sized computer system consisting of a keyboard, monitor, hard drive, high speed internet connection and operating system with a computer program product comprising instructions which, when the program is executed by the administrator (user) will support the execution of the processes involved in the claim 1.
The computer system will typically comprise:
An electronic computer system with:
1. At least 256GB of RAM
2. Any current operating system (Windows/Unix)
3. A monitor
4. A keyboard
5. A mouse
6. A high speed internet connection
7. A solid state hard drive of at least 10TB
A computer program product comprising instructions which, when the program is executed by an electronic computer system will provide GUI based interactive functionality to support the following processing:
1. Register new business entities / commercial enterprises and allow for business entities / commercial enterprises to record preferences for introduction to other business entities / commercial enterprises (Figure 3).
2. Changes to registered details of business entities / commercial enterprises and allow for business entities / commercial enterprises to change preferences for introduction to other business entities / commercial enterprises (Figure 4).
3. Allow the Conciliantis administrator to maintain electronic data interchange parameters for each subscriber (Figure 5).
4. Invoke the Conciliantis Process Engine (CPE), which will will invoke the following processes to provide good quality data based upon the search and internet trawl operations (Figure 6).
a. For each registered subscriber, search the registered business entities / commercial enterprises and apply the selection parameters particular to each business entity / commercial enterprise (Figure 61) AND
b. Trawl the internet and apply the selection parameters particular to each business entity / commercial enterprise (Figure 6.2).
c. Cleanse the results and apply filter and match parameters and send the results by electronic data transfer to the subscribers (Figure 6.3).
5. Allow subscribers to review the results (Figure 7).
Advantageously, my invention makes use of latest technologies to ensure that business entities / commercial enterprises have greatly increased opportunities to buy better and sell more and be fully informed on market developments on an international scale.
Further benefits and advantages of the present invention will become apparent after a careful reading of the detailed description with appropriate reference to the accompanying drawings. 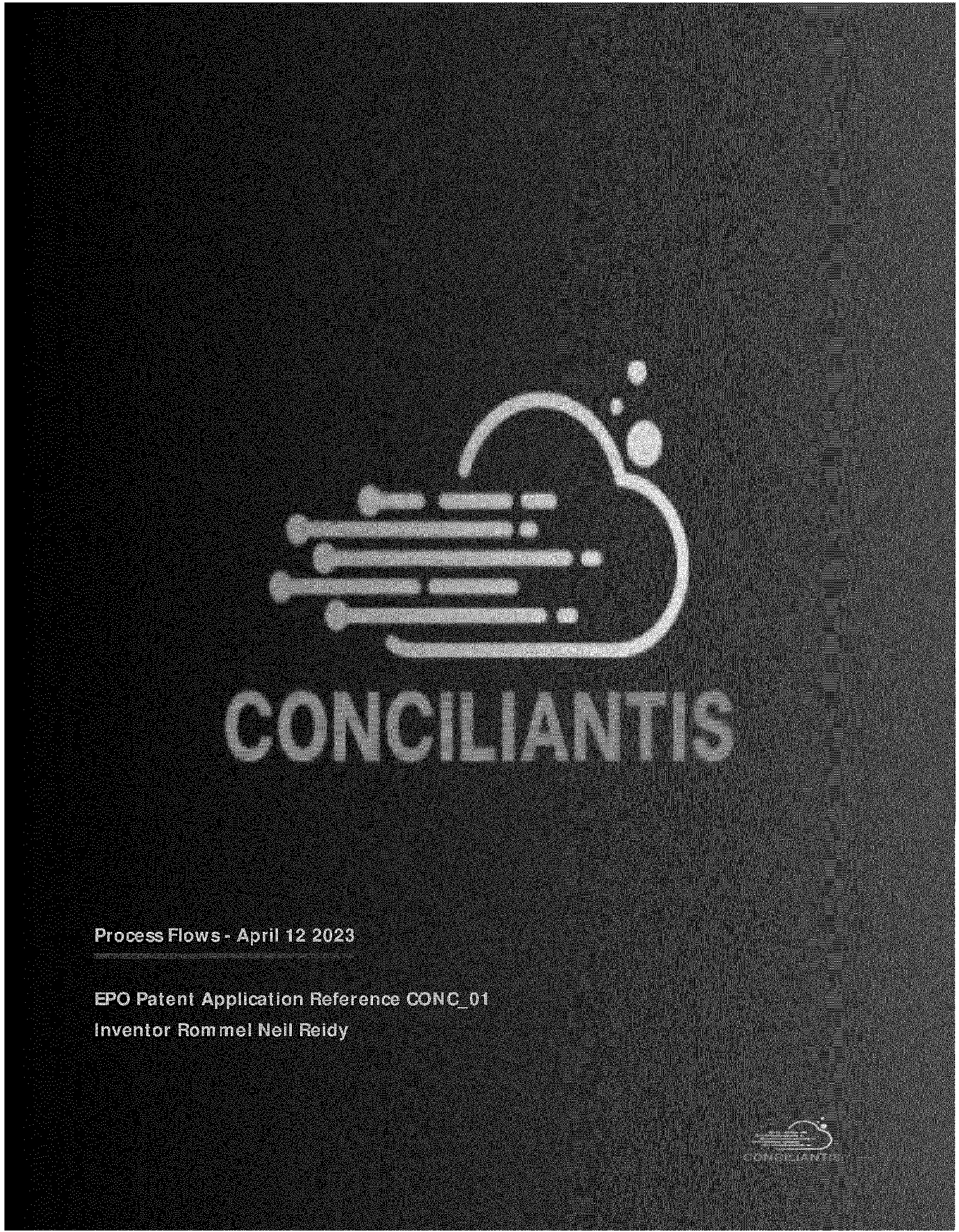 **Contents**
| | |
|---|---|
| **Introduction** | **3** |
| **Figure 1 - Functional Architecture** | **4** |
| **Process Flow 1 - Create Subscriber** | **5** |
| **Process Flow 2 - Update Subscriber** | **6** |
| **Process Flow 3 - Search Subscribers** | **7** |
| **Process Flow 4 - Trawl Internet** | **8** |
| **Process Flow 5 - CPE** | **9** |
| **Abbreviations** | **10** |
**Introduction**
In the following diagrams a subscriber is to be taken to mean a business entity and or a commercial enterprise.
Any reference to a business entity also appliesto acommercial enterprise and vice versa.
